# EUROPEAN PATENT SPECIFICATION

(11) **EP 2 980 635 B1**
(45) Date of publication and mention of the grant of the patent: **30.01.2019**
(21) Application number: 13834319.9
(22) Date of filing: 18.06.2013
(51) Int. Cl.: G02F 1/1335, G02F 1/1333, G02F 1/1343, G06F 3/041

(54) **COLOUR FILM SUBSTRATE AND MANUFACTURING METHOD THEREFOR, TOUCHSCREEN AND DISPLAY DEVICE**
FARBFILMSUBSTRAT UND HERSTELLUNGSVERFAHREN DAFÜR, BERÜHRUNGSBILDSCHIRM UND ANZEIGEVORRICHTUNG
SUBSTRAT DE FILM COULEUR ET PROCÉDÉ DE FABRICATION DE CE DERNIER, ÉCRAN TACTILE ET DISPOSITIF D'AFFICHAGE

(30) Priority: 26.03.2013 CN 201310098751
(43) Date of publication of application: 03.02.2016
(73) Proprietor: Chengdu BOE Optoelectronics Technology Co., Ltd., Chengdu, Sichuan 611731 (CN); BOE Technology Group Co., Ltd., Chaoyang District, Beijing 100016 (CN)
(72) Inventor: KO, Young Yik, Beijing 100176 (CN); HUANG, Weiyun, Beijing 100176 (CN); NAN, Yingying, Beijing 100176 (CN)
(74) Representative: Klunker IP Patentanwälte PartG mbB
(86) International application number: PCT/CN2013/077421
(87) International publication number: WO 2014/153855

(56) References cited:
- EP-A1- 2 749 932
- EP-A2- 2 447 813
- WO-A1-2006/054585
- WO-A1-2012/046702
- CN-A- 101 320 107
- CN-A- 101 819 343
- CN-A- 101 963 713
- CN-A- 102 566 116
- CN-A- 102 749 766
- US-A1- 2009 161 047

## Description

### TECHNICAL FIELD

The present invention relates to a color filter substrate, a manufacturing method thereof, a touch screen and a display device.

### BACKGROUND

Touch screen, also called as "touch control panel", is currently the most simple, convenient and natural human-computer interaction mode, and is a new compelling multimedia interactive device.

A traditional liquid crystal display (LCD) touch screen involves a touch control panel that is disposed between a color filter substrate and a polarizer of an LCD panel, that is, a touch sensor is disposed on the LCD panel. Such a traditional LCD touch screen is referred to as "on-cell" touch screen. This kind of touch screen is very heavy and is difficult to satisfy the increasing requirements on thin and light property of display products.

In another aspect, in the traditional touch screen product, the LCD panel is disposed outside of the touch control panel and a physical space is required between the LCD panel and the touch control panel. Therefore, the interface between an upper surface of the LCD panel and a bottom surface of the touch control panel can reflect external light and the like, and hence the readability may become poor in sunlight.

EP 2 447 813 A2, which is considered the closest prior art, discloses a LCD having a built-in touch screen panel and including a first substrate having a plurality of pixels, wherein each of the pixels comprises a thin film transistor and a pixel electrode; a plurality of common electrode patterns corresponding to the pixel electrodes and spaced from each other along a second direction; a second substrate facing the first substrate, the second substrate having color filter patterns, wherein the color filter patterns are arranged to correspond to the pixels; a plurality of black matrix patterns between the color filter patterns, the plurality of black matrix patterns being spaced from each other along a first direction crossing the second direction; and a liquid crystal layer between the first and second substrates, wherein the plurality of common electrode patterns and at least one of the black matrix patterns are used as driving electrodes and sensing electrodes, respectively.

EP 2 749 932 A1, which forms prior art under Article 54(3) EPC, discloses a touch panel integrated in a color filter substrate and a touch display device, the touch panel integrated in a color filter substrate includes: a transparent substrate; a conductive layer disposed on the transparent substrate, where the conductive layer includes a plurality of first conductive patterns and a plurality of second conductive patterns intersecting with the plurality of first conductive patterns, and each of the second conductive patterns is separated into multiple segments by the plurality of first conductive patterns; a color filter insulating layer disposed on the conductive layer, where the color filter insulating layer includes a plurality of through-holes; and a metal bridging layer disposed on the color filter insulating layer, where the multiple segments of the second conductive pattern are connected together by the metal bridging layer via the through-holes. With the technical solutions of the present invention, the color resist is used as the insulating layer to replace the existing organic film layer, thus avoiding the undesirable risk brought about by the manufacturing process for coating the organic film, simplifying the manufacturing process and reducing the production costs.

US 2009/161047 A1 discloses a color filter substrate for a LCD, which includes a substrate having a non-pixel region and a pixel region, a black matrix and a light blocking color filter layered in the non-pixel region, and a color filter arranged in the pixel region. The light blocking color filter may be formed simultaneously with the color filter, and may include color filter material having light blocking properties at various wavelengths to supplement the light blocking properties of the black matrix. The light blocking color filter occupies a portion of the non-pixel region and has a thickness so that the black matrix in the non-pixel region may have a thickness that is less than a thickness of the color filter arranged in the pixel region.

### SUMMARY

It is an object of the present invention to provide a color filter substrate, a manufacturing method thereof, a touch screen and a display device, by which the touch screen can be made thin and light, and by which the touch screen can be made more readable in sunlight.

The object is achieved by the features of the respective independent claims. Further embodiments are defined in the respective dependent claims.

### BRIEF DESCRIPTION OF THE DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention.
FIGs. 1A and 1B are schematic structural top views of two examples of a color filter substrate provided by an embodiment of the present invention;
FIG. 2 is a partial enlarged view of FIG. 1A;
FIGs. 3A and 3B are schematic structural sectional views of two examples of FIG. 2 along the A-A' direction;
FIG. 4 is a schematic structural top view of another color filter substrate provided by an example not according to the present invention;
FIG. 5 is a partial enlarged view of FIG. 4;
FIGs. 6A and 6B are schematic structural sectional views of two examples of FIG. 5 along the A-A' direction;
FIG. 7 is a schematic diagram illustrating the circuit switching of the color filter substrate as shown in FIG. 3A provided by an embodiment of the present invention;
FIG. 8 is a schematic diagram illustrating the circuit switching of the color filter substrate as shown in FIG. 6A provided by an example not according to the present invention;
FIG. 9 is a schematic diagram of a method for manufacturing a color filter substrate provided by an embodiment of the present invention;
FIG. 10 is a schematic diagram illustrating the process of providing first connecting lines on a transparent substrate in the method for manufacturing the color filter substrate provided by an embodiment of the present invention;
FIG. 11 is a schematic diagram illustrating the process of providing a color filter film layer on the transparent substrate in the method for manufacturing the color filter substrate provided by an embodiment of the present invention;
FIG. 12 is a schematic diagram illustrating the process of providing first sensing units, second sensing units and second connecting lines on the transparent substrate in the method for manufacturing the color filter substrate provided by an embodiment of the present invention;
FIG. 13 is a schematic diagram of another method for manufacturing a color filter substrate provided by an example not according to the present invention;
FIG. 14 is a schematic diagram illustrating the process of providing a BM layer on a transparent substrate in the method for manufacturing the color filter substrate provided by an example not according to the present invention;
FIG. 15 is a schematic diagram illustrating the process of providing first sensing electrodes on the transparent substrate in the method for manufacturing the color filter substrate provided by an example not according to the present invention;
FIG. 16 is a schematic diagram illustrating the process of providing a color filter film layer on the transparent substrate in the method for manufacturing the color filter substrate provided by an example not according to the present invention; and
FIG. 17 is a schematic diagram illustrating the process of providing second sensing electrodes on the transparent substrate in the method for manufacturing the color filter substrate provided by an example not according to the present invention.

Reference numerals of the accompanying drawings:
1- transparent substrate; 2- color filter film layer; 21- filter element; 3- first sensing electrode; 31- first sensing unit; 32- first connecting line; 4- second sensing electrode; 41-second sensing unit; 42- second connecting line; 5- BM layer; 6- planarization layer; 7-transparent conductive layer; 9- insulating layer; 10- anisotropic conductive material; 11-sealant; 20- array substrate; 21- connection point; 22- through hole; 33- black strip.

### DETAILED DESCRIPTION

For more clear understanding of the objectives, technical proposals and advantages of the embodiments of the present invention, clear and complete description will be given below to the technical proposals of the embodiments of the present invention with reference to the accompanying drawings of the embodiments of the present invention. It will be obvious to those skilled in the art that the preferred embodiments are only partial embodiments of the present invention but not all the embodiments. All the other embodiments obtained by those skilled in the art without creative efforts on the basis of the embodiments of the present invention illustrated shall fall within the scope of protection of the present invention.

Unless otherwise specified, the technical or scientific terms used herein have normal meanings understood by those skilled in the art. The words "first", "second" and the like used in the description and the claims of the patent application of the present invention do not indicate the sequence, the number or the importance but are only used for distinguishing different components. Similarly, the words "a", "an" and the like also do not indicate the number but only indicate at least one. The words "comprise", "include" and the like only indicates that an element or a component before the word contains elements or components listed after the word and equivalents thereof, not excluding other elements or components. The words "connection", "connected" and the like are not limited to physical or mechanical connection but may include electrical connection, either directly or indirectly.
The words "on", "beneath", "left", "right" and the like only indicate the relative position relationship which is correspondingly changed when the absolute position of a described object is changed.

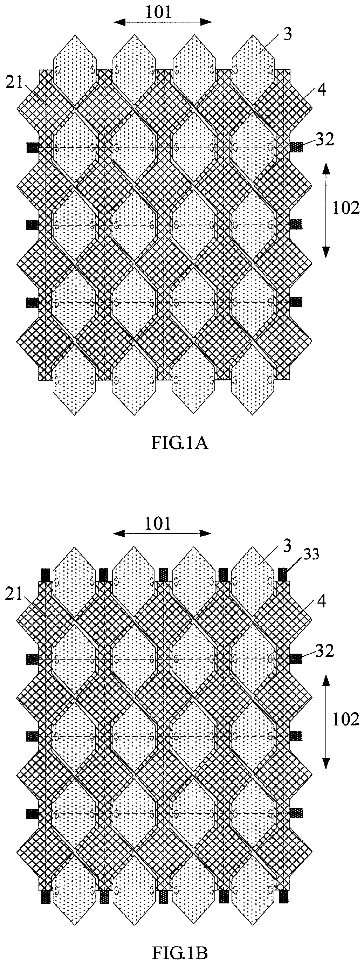

An embodiment of the present invention provides a color filter substrate, as illustrated in FIG. 1A or FIG. 1B, FIG.2, and FIG. 3A or FIG. 3B. The color filter substrate comprises: a transparent substrate 1 and a color filter film layer 2 disposed on the transparent substrate 1, and the color filter film layer 2 includes a plurality of filter elements 21 (referred to the dotted line frames in the figure); and each filter element may correspond to a sub-pixel, and for instance, may be a red filter element, a green filter element or a blue filter element. Moreover, the color filter substrate further comprises: a plurality of first sensing electrodes 3 and a plurality of second sensing electrodes 4, and portions of the color filter film layer 2, disposed at crossed positions of the first sensing electrodes 3 and the second sensing electrodes 4, isolates the first sensing electrodes 3 from the second sensing electrodes 4 at the crossed positions and hence a touch sensing capacitor can be formed there.

It should be noted that the working principle of the touch screen is that: when the display screen is touched by a finger or other similar objects, charges can be generated at touched positions through the touch sensing capacitor; the variation of the charges of the touch sensing capacitor is detected by the first sensing electrodes 3 and the second sensing electrodes 4 and transmitted to a control chip in the form of coordinate; and the control chip determines input information according to transmitted touch signals and hence achieves the control of display. The color filter film layer of the embodiment includes a plurality of the filter elements. The plurality of the filter elements may be closely connected to each other on mutually overlapped portions of respective edges, may be not overlapped but closely bonded and connected to each other, and may also be mutually spaced by structures having an isolation function, for instance, spaced from each other by black matrix (BM). Preferably, an overlapped portion is formed between two adjacent filter elements of the color filter film layer, and hence the phenomenon of light leakage due to the fact that the two adjacent filter elements are not tightly connected to each other can be prevented.

In a color filter substrate provided by the embodiment, first sensing electrodes and second sensing electrodes are disposed on the color filter substrate; and touch positions can be positioned through the first sensing electrodes and the second sensing electrodes, so that the color filter substrate can achieve the touch function. In addition, as the first sensing electrodes are insulated from the second sensing electrodes via a color filter film layer, compared with the traditional color filter substrate of the traditional touch screen, an insulating layer which is particularly configured to space the first sensing electrodes and the second sensing electrodes is not required any more. The touch screen comprising the color filter substrate becomes thinner and lighter compared with the traditional "on-cell" touch screen. Moreover, as the first sensing electrodes and the second sensing electrodes are disposed on the color filter substrate, the readability in sunlight can be improved compared with the traditional "on-cell" touch screen.

It should be noted that the color filter substrate provided by the embodiment of the present invention not only is applicable to an LCD device but also is applicable to an organic light-emitting diode (OLED) display device or other types of display devices.

Optionally, the first sensing electrodes 3 are arranged in a plurality of rows along a first direction, and the second sensing electrodes 4 are arranged in a plurality of rows along a second direction. Preferably, as illustrated in FIG. 1, in the embodiment of the present invention, the first sensing electrodes 3 are arranged in a plurality of rows along a first direction 101, and the second sensing electrodes 4 are arranged in a plurality of rows along a second direction 102.

Preferably, as illustrated in FIG. 1, the first direction 101 is perpendicular to the second direction 102. Detailed description will be given below to the embodiment of the present invention by taking this type as an example.

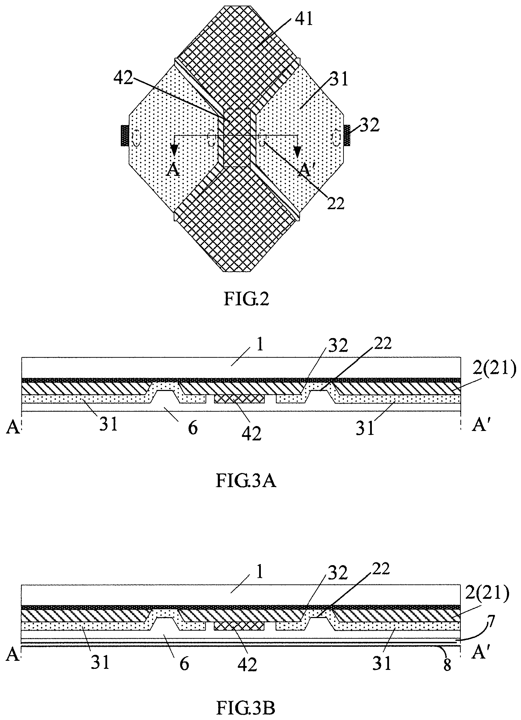

According to the invention, as illustrated in FIG. 2 and FIG. 3A or FIG. 3B, the first sensing electrode 3 includes first sensing units 31 and first connecting lines 32, in which the first sensing units 31 of a same first sensing electrode 3 are electrically connected with each other through the first connecting lines 32; and the second sensing electrode 4 includes second sensing units 41 and second connecting lines 42, in which the second sensing units 41 of a same second sensing electrode 4 are electrically connected with each other through the second connecting lines 42. The first connecting lines 32 and the second connecting lines 42 may be made of conductive materials, and the materials may be the same with those for the
first sensing units 31 and the second sensing units 41, and for instance, may be indium tin oxide (ITO); and the material may also be conductive metals and the like, and for instance may be chromium or the like. The first connecting lines 32 and the second connecting lines 42 are respectively connected with the first sensing units 31 and the second sensing units 41. The examples of the shapes of the first connecting lines 32 and the second connecting lines 42 can be as shown in FIG. 2. Of course, the first sensing units 31 and the second sensing units 41 may be in the rhombic shapes as shown in FIG. 2 and may also adopt other shapes. The shapes of the first connecting lines 32 and the second connecting lines 42 are also not limited to the shapes as shown in the accompanying drawings as long as the function of connecting the first sensing units 31 and the second sensing units 41 can be achieved.

In the embodiment, detailed description will be given below by taking the case that the first sensing units 31, the second sensing units 41, the first connecting lines 32 and the second connecting lines 42 adopt the shapes as shown in FIG. 2 as an example.

According to the invention, as illustrated in FIG. 2 and FIG. 3A or FIG. 3B, the first sensing units 31, the second sensing units 41 and the second connecting lines 42 are arranged on a same layer; the first sensing units 31 are insulated from the second sensing units 41 and the second connecting lines 42; the first connecting lines 32 and the first sensing units 31 are arranged on different layers; the color filter film layer 2 is disposed between the first connecting lines 32 and the first sensing units 31; through holes 22 are formed in the color filter film layer 2, and the first sensing units 31 of a same first sensing electrode 3 are electrically connected with the first connecting lines 32 via the through holes 22. In this way, as illustrated in FIG. 2 and FIG. 3A or FIG. 3B, the first sensing units 31, the second sensing units 41 and the second connecting lines 42 are disposed on the color filter film layer 2; the second sensing units 41, disposed in the same row, of the second sensing electrode are directly electrically connected with the second connecting lines 42; the first connecting lines 32 are disposed beneath the color filter film layer 2 (relative to the substrate 1); the through
holes 22 are formed in the color filter film layer 2; and the first sensing units 31 disposed on the color filter film layer 2 are connected with the first connecting lines 32 disposed beneath the color filter film layer 2 via the through holes 22 on the color filter film layer 2, and hence the first sensing units 31, disposed in the same row, of the first sensing electrode 3 are electrically connected with each other through the first connecting lines 32.

It should be noted that: in the embodiment of the present invention, the words "on" and "beneath" are based on the sequence in which the components are manufactured on the substrate, and the components manufactured at first are disposed "beneath" and the components manufactured subsequently are disposed "on". As illustrated in FIG. 3, the first connecting lines 32 are disposed beneath the color filter film layer 2, and the first sensing units 31, the second sensing units 41 and the second connecting lines 42 are disposed on the color filter film layer 2, namely the color filter film layer 2 is disposed between the first connecting lines 32 and the second sensing units 41, the second connecting lines 42, and the first sensing units 31.

According to the invention, as illustrated in FIG. 1 and FIG. 3A or FIG. 3B, the first connecting lines 32 are in the shape of black strips and disposed at mutually connected positions of the filter elements 21 of the color filter film layer 2. As the first connecting lines 32 are in the shape of the black strips and disposed at the connected positions of the filter elements 21, the first connecting lines 32 not only can be configured to electrically connect the first sensing units 31, disposed in the same row, of the first sensing electrode 3 but also can further prevent the phenomenon of light leakage at the connected positions of the filter elements 21 of the color filter film layer 2. That is to say, the first connecting lines 32 may be part of the black matrix and also can achieve the electrical connection between the first sensing units 31 of a same first sensing electrode 3.

Preferably, as illustrated in FIG. 1B, the color filter substrate further comprises black strips 33 which are intersected with the first connecting lines 32, and the black strips 33 are also disposed at the mutually connected positions of the filter elements 21 of the color filter film layer 2 and hence are perpendicular to the first connecting lines 32. The black strips 33 may be made of a conductive material and hence are insulated from the first connecting lines 32. For instance, the black strips 33 and the first connecting lines 32 may be arranged on different layers. Or, the black strips 33 may be made of an insulating material and hence may be arranged on a same layer as the first connecting lines 32. Or alternatively, both the black strips 33 and the first connecting lines 32 are made of a conductive material and arranged on a same layer but are not mutually connected to each so as to ensure the isolation between them. As the black strips 33 are intersected with the first connecting lines 32 and disposed at the connected positions of the filter elements 21 of the color filter film layer 2, the phenomenon of light leakage at the connected positions of the filter elements 21 of the color filter film layer 2 can be prevented. Optionally, the first connecting lines 32 and the black strips 33 are combined to form black matrixes and are electrically isolated from each other.

It should be noted that the black strips 33 in the embodiment may be part of the black matrixes and may also be specifically provided black strip structures.

Optionally, as illustrated in FIG. 3A, the color filter substrate may further comprise a planarization layer 6; and the first sensing electrodes 3 and the second sensing electrodes 4 are disposed between the planarization layer 6 and the transparent substrate 1, namely are covered by the planarization layer 6.

As illustrated in FIG. 3A, the planarization layer 6 is disposed on the second sensing electrodes 4. The planarization layer 6 not only can planarize the surface of the film layers on the color filter substrate but also has the insulating function, and can separate a liquid crystal capacitor from a sensing capacitor formed by the first sensing electrodes 3 and the second sensing electrodes 4 and hence prevent the mutual interference between the liquid crystal capacitor and the sensing capacitor.

Optionally, as illustrated in FIG. 3B, the color filter substrate may further comprise a transparent conductive layer 7; and the planarization layer 6 is disposed between the transparent conductive layer 7 and the transparent substrate 1.

An LCD device displays images by utilization of electric fields to control the light transmittance through liquid crystals. LCD devices can be roughly divided into the vertical electric field driving type and the horizontal electric field driving type according to the direction of an electric field for driving the liquid crystals. The vertical electric field driving type LCD device is that: a common electrode and a pixel electrode are disposed, opposite to each other, on a color filter substrate and an array substrate respectively, and a vertical electric field is formed between the common electrode and the pixel electrode to drive liquid crystals, and for instance includes twist nematic (TN) type and vertical alignment (VA) type LCD devices. The horizontal electric field LCD device is that: a common electrode and a pixel electrode are disposed on an array substrate, and a horizontal electric field is formed between the common electrode and the pixel electrode to drive liquid crystals, and for instance includes advanced super dimensional switching (ADS) type and in-plane switching (IPS) type LCD devices.

Compared with the horizontal electric field type LCD device, in the vertical electric field type LCD device, a common electrode is also disposed on the color filter substrate, and the vertical electric field is formed by the common electrode and the pixel electrode on the array substrate. In the embodiment of the present invention, the transparent conductive layer 7 may include a common electrode, and hence the color filter substrate may be applicable to the vertical electric field type LCD device.

In one example, the transparent conductive layer 7 is disposed on the planarization layer 6 and includes a common electrode. In a corresponding LCD device, the common electrode on the transparent conductive layer 7 may be electrically connected with a common electrode line on the array substrate.

Moreover, as illustrated in FIG. 3B, as for the color filter substrate in which the transparent conductive layer 7 includes a common electrode, the color filter substrate may further comprise an insulating layer 8, and the transparent conductive layer 7 is disposed between the insulating layer 8 and the transparent substrate 1. That is to say, the insulating layer 8 is disposed on the transparent conductive layer 7. As for the color filter substrate in which the transparent conductive layer 7 includes the common electrode, the insulating layer 8 is also disposed on the transparent conductive layer 7 and is configured to prevent the mutual interference between the liquid crystal capacitor and the capacitor formed by the first sensing electrode 3 and the second sensing electrode 4.

Optionally, as for the color filter substrate of the horizontal electric field type LCD device and an OLED display device, the transparent conductive layer 7 may also be disposed on the planarization layer 6, but in this situation the transparent conductive layer 7 is grounded. Therefore, as for the LCD device, the transparent conductive layer 6 may further prevent the mutual interference between the liquid crystal capacitor and the capacitor formed by the first sensing electrode 3 and the second sensing electrode 4.

The color filter substrate provided by the embodiment of the present invention is not only limited to the color filter substrate as shown in the accompanying drawings, and as long as it falls within the scope of claim 1. For instance, as illustrated in FIGS. 3A and 3B, the first sensing units 31, the second sensing units 41 and the second connecting lines 42 may be also disposed beneath the color filter film layer 2; the first connecting lines 32 may be disposed on the color filter film layer 2; through holes 22 are formed in the color filter film layer 2, and the first connecting lines 32 are electrically connected with the first sensing units 31 via the through holes 22.

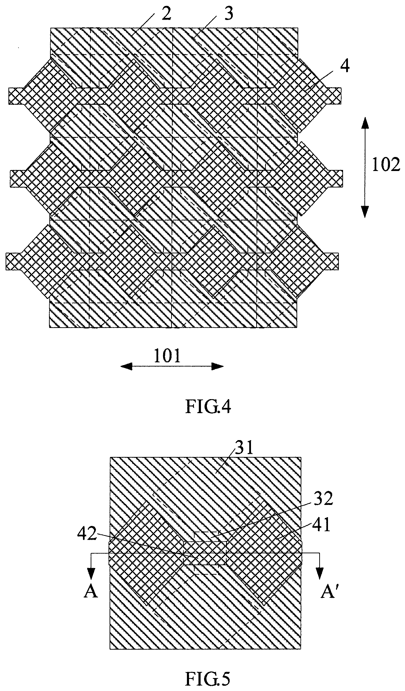

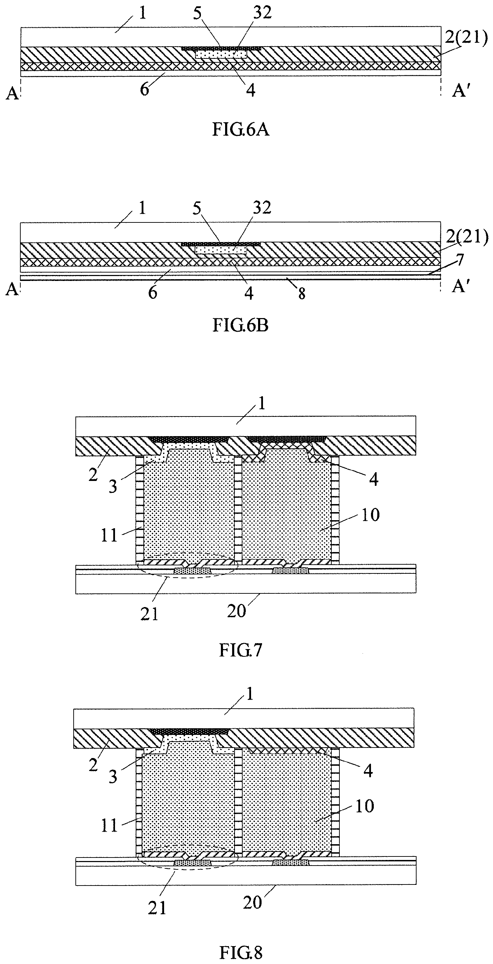

In another example not according to the invention, as illustrated in FIG. 4 and FIG. 6A or FIG. 6B, the first sensing units 31 and the first connecting lines 32 are arranged on a same layer; the second sensing units 41 and the second connecting lines 42 are arranged on a same layer; the first sensing units 31 and the second sensing units 41 are arranged on different layers. The color filter film layer 2 is disposed between the first sensing electrode 3 and the second sensing electrode 4, so that the first sensing electrode 3 is insulated from the second sensing electrode 4. As illustrated in FIG. 4, the first sensing units 31 and the first connecting lines 32 are arranged on a same layer, so that the first sensing units 31, disposed in the same row, of the first sensing electrode 3 can be directly connected with each other through the first connecting lines 32; the second sensing units 41 and the second connecting lines 42 are arranged on a same layer, so that the second sensing units 41, disposed in the same row, of the second sensing electrode 4 can be directly connected with each other through the second connecting lines 42. The color filter film layer 2 is disposed between the first sensing electrode 3 and the second sensing electrode 4, so that the first sensing electrode 3 is insulated from the second sensing electrode 4.

Optionally, as illustrated in FIG. 6A, the color filter substrate may further comprise: a black matrix (BM) layer 5 disposed between the color filter film layer 2 and the transparent substrate 1. The BM layer 5 includes BMs which are disposed at the connected
positions of the filter elements 21 of the color filter film layer. For instance, as illustrated in FIG. 6, the BM layer 5 is disposed beneath the first sensing electrode 3. The color filter film layer 2 includes a plurality of the filter elements 21; joints are provided at the connected positions of the filter elements 21; and the BMs include staggered black strips and are disposed at the connected positions of the filter elements 21 of the color filter film layer. Therefore, the phenomenon of light leakage at the connected positions of the filter elements 21 in the color filter film layer 2 can be further prevented.

Optionally, as illustrated in FIG. 6A, the color filter substrate may further comprise a planarization layer 6; and the color filter film layer 2, the first sensing electrode 3 and the second sensing electrode 4 are disposed between the planarization layer 6 and the transparent substrate 1, namely are covered by the planarization layer 6.

As illustrated in FIG. 6A, the planarization layer 6 is disposed on the second sensing electrode 4. The planarization layer 6 not only can planarize the surface of the film layers on the color filter substrate but also has the insulating function, and can separate the liquid crystal capacitor from the sensing capacitor formed by the first sensing electrode 3 and the second sensing electrode 4 and hence prevent the mutual interference between the liquid crystal capacitance and the sensing capacitance.

Optionally, as illustrated in FIG. 6B, the color filter substrate may further comprise a transparent conductive layer 7; and the planarization layer 6 is disposed between the transparent conductive layer 7 and the transparent substrate 1.

Compared with the horizontal electric field type LCD device, in the vertical electric field type LCD device, the color filter substrate is also provided with a common electrode; and a vertical electric field is formed by the common electrode and the pixel electrode on the array substrate. In the example not according to the invention, the transparent conductive layer may include a common electrode, and hence the color filter substrate may be applicable to the vertical electric field type LCD device.

The transparent conductive layer is disposed on the planarization layer 6. The transparent conductive layer 7 includes a common electrode. In the LCD device, the common electrode of the transparent conductive layer 7 may be electrically connected with the common electrode line on the array substrate.

Moreover, as illustrated in FIG. 6B, as for the color filter substrate in which the transparent conductive layer 7 includes a common electrode, the color filter substrate may further comprise an insulating layer 8, and the transparent conductive layer 7 is disposed between the insulating layer 8 and the transparent substrate 1. That is to say, the insulating layer 8 is disposed on the transparent conductive layer 7. As for the color filter substrate in which the transparent conductive layer 7 includes the common electrode, the insulating layer 8 is also disposed on the transparent conductive layer 7 and configured to prevent the mutual interference between the liquid crystal capacitor and the capacitor formed by the first sensing electrode 3 and the second sensing electrode 4.

Optionally, as for the color filter substrate of the horizontal electric field type LCD device and the OLED display device, the transparent conductive layer 7 may be also disposed on the planarization layer 6, but in this situation the transparent conductive layer is grounded. Therefore, as for the LCD device, the transparent conductive layer 7 is equivalent to the insulating layer and can further prevent the mutual interference between the liquid crystal capacitor and the capacitor formed by the first sensing electrode 3 and the second sensing electrode 4.

The color filter substrate is not limited to the color filter substrate as shown in the accompanying drawings, and as long as the first sensing electrodes 3 and the second sensing electrodes 4 are insulated from each other through the color filter film layer 2, it falls within the scope of protection of the present invention. For instance, as illustrated in FIGs. 6A and 6B, the BM layer 5 may also be disposed between the first sensing electrode 3 and the color filter film layer 2.

An embodiment of the present invention provides a touch screen, which comprises any of the color filter substrates provided by the embodiments of the present invention. In order to achieve the touch function of the touch screen, the touch screen further comprises drive circuits (not shown) which are connected with the first sensing electrodes 3 and the second sensing electrodes 4 and configured to control the first sensing electrodes 3 and the second sensing electrodes 4. The touch screen is applicable to an LCD device and also applicable to an OLED display device.

It should be noted that the first sensing electrodes 3 and the second sensing electrodes 4 are connected with the drive circuits for controlling the first sensing electrodes 3 and the second sensing electrodes 4 on edges of the color filter substrate.

An LCD device generally comprises an array substrate and a color filter substrate which are arranged opposite to each other to form a liquid crystal cell; and a drive circuit is usually disposed on the array substrate. Preferably, the drive circuits for controlling the first sensing electrodes 3 and the second sensing electrodes 4 can be arranged together with the drive circuits on the array substrate. Therefore, not only the processes can be reduced but also the integration level of the display device can be improved. Moreover, the number of circuit boards can be reduced and the costs can be reduced as well. In this case, the first sensing electrodes 3 and the second sensing electrodes 4 on the color filter substrate must be transferred to the array substrate.

In one embodiment, as illustrated in the sectional views of FIG. 7 and in the example not according to invention as illustrated in Fig. 8, the first sensing electrode 3 and the second sensing electrode 4 are electrically connected with connection points 21 on the array substrate 20 through an anisotropic conductive material 10 and connected with the drive circuits and the like through the connection points 21. The anisotropic conductive material 10 is separated from each other through an insulating sealant 11. The anisotropic conductive material may be anisotropic conductive adhesive (ACA) containing conductive metal balls.

An embodiment of the present invention provides a display device, which comprises any touch screen provided by the embodiment of the present invention. The display device may be a display device such as an LCD, electronic paper and an OLED display or any product or component including the display device and having the display function such as a television, a digital camera, a mobile phone and a tablet PC.

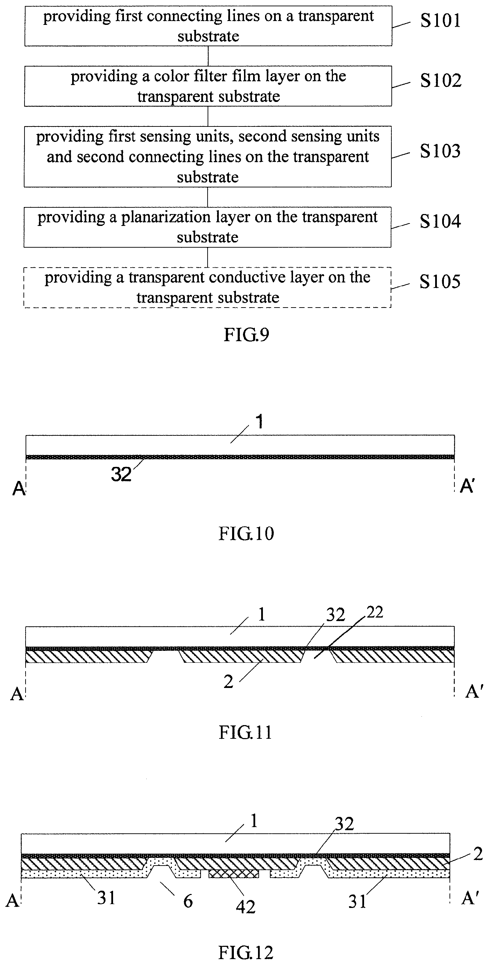

An embodiment of the present invention provides a method for manufacturing a color filter substrate. As illustrated in FIG. 9, the method comprises the following steps.

Step S101: providing first connecting lines on a transparent substrate.

For instance, the first connecting lines are configured to electrically connect first sensing units disposed in the same row. Moreover, preferably, as illustrated in FIG. 10, the first connecting lines 32 are in the shape of black strips and disposed at connected positions of filter elements of a color filter film layer to be formed later and hence can further prevent the phenomenon of light leakage at the connected positions of the filter elements of the color filter film layer. The transparent substrate 1 is, for instance, a glass substrate, a plastic substrate and the like.

Step S102: providing a color filter film layer on the transparent substrate.

For instance, the color filter film layer includes a plurality of closely connected filter elements. Moreover, preferably, an overlapped portion is disposed on edges of two adjacent filter elements of the color filter film layer, and hence the phenomenon of light leakage due to the fact that the two adjacent filter elements are not closely connected can be prevented. As illustrated in FIG. 11, through holes 22 are formed in the color filter film layer 2. It should be noted that the step S102 is executed after the step S101, and hence the process of providing the color filter film layer 2 on the transparent substrate 1 is equivalent to the process of providing the color filter film layer 2 on the transparent substrate 1 on which the first connecting lines 32 formed in the step S101 are formed.

Step S103: providing first sensing units, second sensing units and second connecting lines on the transparent substrate.

For instance, as illustrated in FIG. 12, the first sensing units 31 disposed in the same row are electrically connected with the first connecting lines 32 via the through holes 22 in the color filter film layer 2. The second connecting lines 42 are configured to electrically connect the second sensing units 41 disposed in the same row. It should be noted that the step S103 is executed after the steps S101 and S102, and hence the process of providing the first sensing units 31, the second sensing units 41 and the second connecting lines 42 on the transparent substrate 1 is equivalent to the process of providing the first sensing units 31, the second sensing units 41 and the second connecting lines 42 on the transparent substrate 1 on which the first connecting lines 32 formed in the step S101 and the color filter film layer 2 formed in the step S102 are formed. Similarly, in subsequent steps, the transparent substrate includes film or layer structures formed in the previous steps.

Optionally, the method may further comprise: providing black strips which are intercrossed with the first connecting lines 32 on the transparent substrate 1. For instance, the black strips are disposed at the connected positions of the filter elements of the color filter film layer and insulated from the first connecting lines. Optionally, the black strips and the first connecting lines may be arranged on different layers. For instance, the step of providing the black strips may be executed after the step S104. Or, the step of providing the black strips may be executed between the step S101 and the step S102. Or, the black strips are arranged on a same layer with the first connecting lines and are not connected with the first connecting lines so as to be insulated from the first connecting lines.

Optionally, the manufacturing method may further comprise step S104: providing a planarization layer on the transparent substrate.

For instance, as illustrated in FIG. 3A or 3B, the color filter film layer 2, the first sensing electrode 3 and the second sensing electrode 4 are disposed between the planarization layer 6 and the transparent substrate 1. The planarization layer 6 not only can planarize the surface of the film layers on the color filter substrate but also has the insulating function, and can separate the liquid crystal capacitance from the sensing capacitance formed by the first sensing electrode 3 and the second sensing electrode 4 and hence prevent the mutual interference between the liquid crystal capacitor and the sensing capacitor.

Optionally, the manufacturing method may further comprise step S105: providing a transparent conductive layer on the transparent substrate.

For instance, the planarization layer is disposed between the transparent conductive layer and the transparent substrate. As for the horizontal electric field type LCD device, the transparent conductive layer of the color filter substrate is grounded, and hence the transparent conductive layer can further prevent the mutual interference between the liquid crystal capacitor and the capacitor formed by the first sensing electrode and the second sensing electrode. As for the vertical electric field type LCD device, the transparent conductive layer on the color filter substrate includes a common electrode. As for the VA type LCD device, the method for manufacturing the color filter substrate further comprises the step of providing an insulating layer on the transparent substrate.

For instance, the transparent conductive layer is disposed between the insulating layer and the transparent substrate. The insulating layer is configured to prevent the mutual interference between the liquid crystal capacitor and the capacitor formed by the first sensing electrode and the second sensing electrode.

Of course, the method for manufacturing the color filter substrate provided by the embodiment of the present invention is not only limited to the above steps. For instance, the step of providing the black strips which are intercrossed with the first connecting lines on the transparent substrate may also be executed after the step S103.

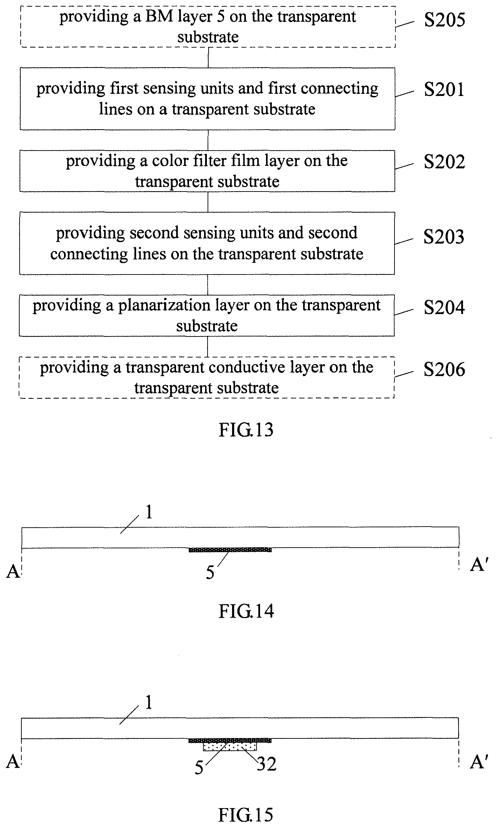

Another example not according to the present invention provides a method for manufacturing a color filter substrate. As illustrated in FIG. 13, the method comprises the following steps.

Step S201: providing first sensing units and first connecting lines on a transparent substrate.

For instance, as illustrated in FIGs. 4 and 15, the first connecting lines 32 are configured to electrically connect the first sensing units 31 disposed in the same row. The transparent substrate 1 is, for instance, a glass substrate, a plastic substrate and the like.

Step S202: providing a color filter film layer on the transparent substrate.

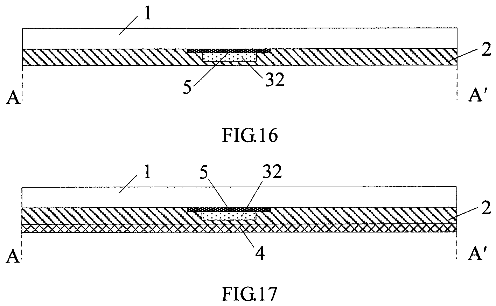

For instance, as illustrated in FIGs. 4 and 16, the color filter film layer 2 includes a plurality of filter elements. Preferably, an overlapped portion is disposed on edge portions of two adjacent filter elements of the color filter film layer, and hence the phenomenon of light leakage due to the fact that the two adjacent filter elements are not closely connected can be prevented. It should be noted that the step S202 is executed after the step S201, and hence the process of providing the color filter film layer 2 on the transparent substrate 1 is equivalent to the process of providing the color filter film layer 2 on the transparent substrate 1 on which the first sensing units 31 and the first connecting lines 32 formed in the step S201 are formed.

Step S203: providing second sensing units and second connecting lines on the transparent substrate.

For instance, as illustrated in FIGs. 4 and 17, the second connecting lines 42 are configured to electrically connect the second sensing units 41 disposed in the same row. It should be noted that the step S203 is executed after the steps S201 and S202, and hence the process of providing the second sensing units and the second connecting lines on the transparent substrate is equivalent to the process of providing the second sensing units 41 and the second connecting lines 42 on the transparent substrate 1 on which the first sensing units 31 and the first connecting lines 32 formed in the step S201 and the color filter film layer 2 formed in the step S202 are formed.

Optionally, the manufacturing method may further comprise step S205 before the step S201: providing a BM layer 5 on the transparent substrate, as illustrated in FIG. 14.

For instance, the BM layer includes BMs which are disposed at the connected positions of the filter elements of the color filter film layer. The BMs are configured to further prevent the phenomenon of light leakage at the connected positions of the filter elements of the color filter film layer.

Optionally, the manufacturing method may further comprise step S204: providing a planarization layer on the transparent substrate.

For instance, as illustrated in FIGs. 6A and 6B, the color filter film layer 2, the first sensing electrode 3 and the second sensing electrode 4 are disposed between the planarization layer 6 and the transparent substrate 1. The planarization layer 6 not only can planarize the surface of the film layers on the substrate but also has the insulating function and can separate the liquid crystal capacitance and the sensing capacitance formed by the first sensing electrode 3 and the second sensing electrode 4 and hence can prevent the mutual interference between the liquid crystal capacitor and the sensing capacitor.

Optionally, the manufacturing method may further comprise step S206: providing a transparent conductive layer on the transparent substrate.

For instance, the planarization layer is disposed between the transparent conductive layer and the transparent substrate. As for the horizontal electric field type LCD device, the transparent conductive layer of the color filter substrate is grounded, and hence the transparent conductive layer can further prevent the mutual interference between the liquid crystal capacitor and the capacitor formed by the first sensing electrode and the second sensing electrode. As for the vertical electric field type LCD device, the transparent conductive layer on the color filter substrate includes: a common electrode which is electrically connected with a common electrode line on an array substrate. Moreover, as for the VA type LCD device, the method for manufacturing the color filter substrate further comprises the step of providing an insulating layer on the transparent substrate.

For instance, the transparent conductive layer is disposed between the insulating layer and the transparent substrate. The insulating layer is configured to prevent the mutual interference between the liquid crystal capacitor and the capacitor formed by the first sensing electrode 3 and the second sensing electrode 4.

Of course, the manufacturing method provided by the example not according to the present invention is not only limited to the above steps. For instance, the step of providing the BM layer on the transparent substrate may also be executed after the step S203.

## Claims

1. A color filter substrate, comprising:
a transparent substrate (1) and a color filter film layer (2) disposed on the transparent substrate (1), wherein the color filter film layer (2) includes a plurality of filter elements (21), a plurality of first sensing electrodes (3) and a plurality of second sensing electrodes (4);
wherein the first sensing electrodes (3) are insulated from the second sensing electrodes (4) at crossed positions by portions of the color filter film layer (2), disposed at the crossed positions of the first sensing electrodes (3) and the second sensing electrodes (4), in order to form a touch sensing capacitor;
the first sensing electrodes (3) include:
first sensing units (31) and first connecting lines (32), in which the first sensing units (31) of a same first sensing electrode are electrically connected with each other through the first connecting lines (32); the first connecting lines (32) are part of a black matrix, and the first connecting lines (32) are disposed at connecting positions of the filter elements (21) of the color filter film layer (2); **characterized in that**
the second sensing electrodes (4) include: second sensing units (41) and second connecting lines (42), in which the second sensing units (41) of a same second sensing electrode (4) are electrically connected with each other through the second connecting lines (42);
the first sensing units (31), the second sensing units (41) and the second connecting lines (42) are arranged on a same layer; the first sensing units (31) are insulated from the second sensing units (41) and the second connecting lines (42); the first connecting lines (32) and the first sensing units (31) are arranged on different layers; the color filter film layer (2) is disposed between the first connecting lines (32) and the first sensing units (31); through holes (22) are formed in the color filter film layer (2); and the first sensing units (31) of a same first sensing electrode are electrically connected with the first connecting lines (32) via the through holes (22).

2. The color filter substrate according to claim 1, wherein a plurality of the first sensing electrodes (3) are arranged in a plurality of rows along a first direction; and a plurality of the second sensing electrodes (4) are arranged in a plurality of rows along a second direction.

3. The color filter substrate according to claim 1, further comprising black strips which are intersected with the first connecting lines (32), wherein the black strips are disposed at the connected positions of the filter elements (21) of the color filter film layer (2) and insulated from the first connecting lines (32).

4. The color filter substrate according to any one of claims 1 to 3, further comprising a planarization layer (6), wherein the color filter film layer (2), the first sensing electrodes (3) and the second sensing electrodes (4) are disposed between the planarization layer (6) and the transparent substrate (1).

5. The color filter substrate according to claim 4, further comprising a transparent conductive layer, wherein the planarization layer (6) is disposed between the transparent conductive layer and the transparent substrate (1).

6. The color filter substrate according to claim 5, wherein the transparent conductive layer is configured to be grounded.

7. A touch screen, comprising the color filter substrate according to any one of claims 1 to 6.

8. The touch screen according to claim 7, further comprising: an array substrate and drive circuits which are connected with the first sensing electrodes (3) and the second sensing electrodes (4) and configured to control the first sensing electrodes (3) and the second sensing electrodes (4), wherein the driving circuits are arranged together with a drive circuit on the array substrate.

9. A display device, comprising the touch screen according to claim 7 or 8.

10. A method for manufacturing a color filter substrate according to claim 1, comprising:
providing first connecting lines (32) on a transparent substrate (1), in which the first connecting lines (32) are configured to electrically connect first sensing units (31) of a same first sensing electrode;
providing a color filter film layer (2) on the transparent substrate (1), in which the color filter film layer (2) includes a plurality of closely connected filter elements (21), and through holes (22) are formed in the color filter film layer (2); and
providing the first sensing units (31), second sensing units (41) and second connecting lines (42) on the transparent substrate (1), in which the first sensing units (31) are electrically connected with the first connecting lines (32) via the through holes (22) in the color filter film layer (2); the second connecting lines (42) are configured to electrically connect the second sensing units (41) of a same second sensing electrode; and the first sensing units (31) are insulated from the second sensing units (41) and the second connecting lines (42), wherein
the first connecting lines (32) are part of a black matrix, and
the first connecting lines (32) are disposed at connected positions of the filter elements (21) of the color filter film layer (2).

## Patentansprüche

1. Farbfiltersubstrat mit:
einem transparenten Substrat (1) und einer Farbfilmdünnschichtlage (2), die auf dem transparenten Substrat (1) angeordnet ist, wobei die Farbfilterdünnschichtlage (2) eine Vielzahl von Filterelementen (21), eine Vielzahl von ersten Erfassungselektroden (3) und eine Vielzahl von zweiten Erfassungselektroden (4) aufweist;
wobei die ersten Erfassungselektroden (3) von den zweiten Erfassungselektroden (4) an Kreuzungspunkten durch Teile der Farbfilterdünnschichtlage (2), die an den Kreuzungspunkten der ersten Erfassungselektroden (3) und der zweiten Erfassungselektroden (4) angeordnet sind, isoliert sind, um einen Berührungserfassungskondensator zu bilden;
wobei die ersten Erfassungselektroden (3) aufweisen: erste Erfassungseinheiten (31) und ersten Verbindungsleitungen (32), unter denen die ersten Erfassungseinheiten (31) einer selben ersten Erfassungselektrode elektrisch miteinander durch die ersten Verbindungsleitungen (32) verbunden sind; wobei die ersten Verbindungsleitungen (32) Teil einer Schwarzmatrix sind, und die ersten Verbindungsleitungen (32) an Verbindungspositionen der Farbelemente (21) der Farbfilterdünnschichtlage (2) angeordnet sind; **dadurch gekennzeichnet, dass**
die zweiten Erfassungselektroden (4) aufweisen: zweite Erfassungseinheiten (41) und zweite Verbindungsleitungen (42), unter denen die zweiten Erfassungseinheiten (41) einer selben zweiten Erfassungselektrode (4) elektrisch miteinander durch die zweiten Verbindungsleitungen (42) verbunden sind;
die ersten Erfassungseinheiten (31), die zweiten Erfassungseinheiten (41) und die zweiten Verbindungsleitungen (42) auf einer selben Lage angeordnet sind; die ersten Erfassungseinheiten (31) von den zweiten Erfassungseinheiten (41) und den zweiten Verbindungsleitungen (42) isoliert sind; die ersten Verbindungsleitungen (32) und die ersten Erfassungseinheiten (31) auf unterschiedlichen Lagen angeordnet sind; die Farbfilterdünnschichtlage (2) zwischen der ersten Verbindungsleitungen (32) und der ersten Erfassungseinheiten (31) angeordnet ist; Durchgangslöcher (22) in der Farbfilterdünnschichtlage (2) gebildet sind; und die ersten Erfassungseinheiten (31) einer delben ersten Erfassungselektrode elektrisch mit den ersten Verbindungsleitungen (32) durch die Durchgangslöcher (22) verbunden sind.

2. Farbfiltersubstrat gemäß Anspruch 1, wobei eine Vielzahl der ersten Erfassungselektroden (3) in einer Vielzahl von Reihen entlang einer ersten Richtung angeordnet sind; und eine Vielzahl von zweiten Erfassungselektroden (4) in einer Vielzahl von Reihen entlang einer zweiten Richtung angeordnet sind.

3. Farbfiltersubstrat gemäß Anspruch 1, weiter aufweisend schwarze Streifen, die sich mit den ersten Verbindungsleitungen (32) schneiden, wobei die schwarzen Streifen an den Verbindungspositionen der Filterelemente (21) der Farbfilterdünnschichtlage (2) angeordnet sind und von den ersten Verbindungsleitungen (32) isoliert sind.

4. Farbfiltersubstrat gemäß einem der Ansprüche 1 bis 3 weiter mit einer Planarisierungslage (6), wobei die Farbfilterdünnschichtlage (2), die ersten Erfassungselektroden (3) und die zweiten Erfassungselektroden (4) zwischen der Planarisierungslage (6) und dem transparenten Substrat (1) angeordnet sind.

5. Farbfiltersubstrat gemäß Anspruch 4 weiter mit einer transparenten leitfähigen Lage, wobei die Planarisierungslage (6) zwischen der transparenten leitfähigen Lage und dem transparenten Substrat (1) angeordnet ist.

6. Farbfiltersubstrat gemäß Anspruch 5, wobei die transparente leitfähige Lage konfiguriert ist, um mit Masse verbunden zu werden.

7. Berührungsschirm mit dem Farbfiltersubstrat gemäß einem der Ansprüche 1 bis 6.

8. Berührungsschirm gemäß Anspruch 7 weiter mit: einem Array-Substrat und Ansteuerschaltungen, die mit den ersten Erfassungselektroden (3) und den zweiten Erfassungselektroden (4) verbunden sind und konfiguriert sind, um die ersten Erfassungselektroden (3) und die zweiten Erfassungselektroden (4) zu steuern, wobei die Ansteuerschaltungen zusammen mit einer Ansteuerschaltung auf dem Array-Substrat angeordnet sind.

9. Anzeigevorrichtung mit dem Berührungsschirm gemäß Anspruch 7 oder 8.

10. Verfahren zum Herstellen eines Farbfiltersubstrats gemäß Anspruch 1 mit:
Bereitstellen erster Verwendungsleitungen (32) auf einem transparenten Substrat (1), unter denen die ersten Verbindungsleitungen (32) konfiguriert sind, um elektrisch mit ersten Erfassungseinheiten (31) einer gleichen ersten Erfassungselektrode zu verbinden;
Bereitstellen einer Farbfilterdünnschichtlage (2) auf dem transparenten Substrat (1), wobei die Farbfilterdünnschichtlage (2) eine Vielzahl von eng verbundenen Filterelementen (21) aufweist und Durchgangslöcher (22) in der Farbfilterdünnschichtlage (2) gebildet sind; und
Bereitstellen der ersten Erfassungseinheiten (31), der zweiten Erfassungseinheiten (41) und der zweiten Verbindungsleitungen (42) auf dem transparenten Substrat (1), wobei die ersten Erfassungseinheiten (31) elektrisch mit den ersten Verbindungsleitungen (32) über die Durchgangslöcher (22) in der Farbfilterdünnschichtlage (2) verbunden sind; wobei die zweiten Verbindungsleitungen (22) konfiguriert sind, um elektrisch mit den zweiten Erfassungseinheiten (21) einer selben zweiten Erfassungselektrode verbunden zu sein; und wobei die ersten Erfassungseinheiten (31) von den zweiten Erfassungseinheiten (41) und den zweiten Verbindungsleitungen (42) isoliert sind, wobei die ersten Verbindungsleitungen (32) Teil einer schwarzen Matrix sind, und wobei die ersten Verbindungsleitungen (32) an Verbindungspositionen der Farbfilterelemente (21) der Farbfilterdünnschichtlage (2) angeordnet sind.

## Revendications

1. Substrat de filtre couleur, comprenant :
un substrat transparent (1) et une couche de film de filtre couleur (2) qui est disposée sur le substrat transparent (1), dans lequel la couche de film de filtre couleur (2) inclut une pluralité d'éléments de filtre (21), une pluralité de premières électrodes de détection (3) et une pluralité de secondes électrodes de détection (4) ; dans lequel :
les premières électrodes de détection (3) sont isolées des secondes électrodes de détection (4) au niveau de positions de croisement au moyen de parties de la couche de film de filtre couleur (2) qui sont disposées au niveau des positions de croisement des premières électrodes de détection (3) et des secondes électrodes de détection (4), afin de former un condensateur de détection de toucher tactile ;
les premières électrodes de détection (3) incluent :
des premières unités de détection (31) et des premières lignes de connexion (32), dans lequel les premières unités de détection (31) d'une même première électrode de détection sont connectées électriquement les unes aux autres par l'intermédiaire des premières lignes de connexion (32) ; les premières lignes de connexion (32) constituent une partie d'une matrice noire, et les premières lignes de connexion (32) sont disposées au niveau de positions de connexion des éléments de filtre (21) de la couche de film de filtre couleur (2) ;
**caractérisé en ce que** :
les secondes électrodes de détection (4) incluent :
des secondes unités de détection (41) et des secondes lignes de connexion (42), dans lequel les secondes unités de détection (41) d'une même seconde électrode de détection (4) sont connectées électriquement les unes aux autres par l'intermédiaire des secondes lignes de connexion (42) ;
les premières unités de détection (31), les secondes unités de détection (41) et les secondes lignes de connexion (42) sont agencées sur une même couche ; les premières unités de détection (31) sont isolées des secondes unités de détection (41) et des secondes lignes de connexion (42) ; les premières lignes de connexion (32) et les premières unités de détection (31) sont agencées sur des couches différentes ; la couche de film de filtre couleur (2) est disposée entre les premières lignes de connexion (32) et les premières unités de détection (31) ; des trous traversants (22) sont formés dans la couche de film de filtre couleur (2) ; et les premières unités de détection (31) d'une même première électrode de détection sont connectées électriquement avec les premières lignes de connexion (32) via les trous traversants (22).

2. Substrat de filtre couleur selon la revendication 1, dans lequel les électrodes d'une pluralité des premières électrodes de détection (3) sont agencées selon une pluralité de rangées suivant une première direction ; et les électrodes d'une pluralité des secondes électrodes de détection (4) sont agencées selon une pluralité de rangées suivant une seconde direction.

3. Substrat de filtre couleur selon la revendication 1, comprenant en outre des bandes noires qui sont intersectées par les premières lignes de connexion (32), dans lequel les bandes noires sont disposées au niveau des positions de connexion des éléments de filtre (21) de la couche de film de filtre couleur (2) et sont isolées des premières lignes de connexion (32).

4. Substrat de filtre couleur selon l'une quelconque des revendications 1 à 3, comprenant en outre une couche de planarisation (6), dans lequel la couche de film de filtre couleur (2), les premières électrodes de détection (3) et les secondes électrodes de détection (4) sont disposées entre la couche de planarisation (6) et le substrat transparent (1).

5. Substrat de filtre couleur selon la revendication 4, comprenant en outre une couche conductrice transparente, dans lequel la couche de planarisation (6) est disposée entre la couche conductrice transparente et le substrat transparent (1).

6. Substrat de filtre couleur selon la revendication 5, dans lequel la couche conductrice transparente est configurée de manière à ce qu'elle soit reliée à la masse.

7. Écran tactile, comprenant le substrat de filtre couleur selon l'une quelconque des revendications 1 à 6.

8. Écran tactile selon la revendication 7, comprenant en outre : un substrat de réseau et des circuits de pilotage qui sont connectés avec les premières électrodes de détection (3) et les secondes électrodes de détection (4) et qui sont configurés de manière à ce qu'ils commandent les premières électrodes de détection (3) et les secondes électrodes de détection (4), dans lequel les circuits de pilotage sont agencés en association avec un circuit de pilotage sur le substrat de réseau.

9. Dispositif d'affichage, comprenant l'écran tactile selon la revendication 7 ou 8.

10. Procédé pour fabriquer un substrat de filtre couleur selon la revendication 1, comprenant :
la constitution de premières lignes de connexion (32) sur un substrat transparent (1), dans lequel les premières lignes de connexion (32) sont configurées de manière à ce qu'elles soient connectées électriquement à des premières unités de détection (31) d'une même première électrode de détection ;
la constitution d'une couche de film de filtre couleur (2) sur le substrat transparent (1), dans lequel la couche de film de filtre couleur (2) inclut une pluralité d'éléments de filtre connectés de façon étroite (21), et des trous traversants (22) sont formés dans la couche de film de filtre couleur (2) ; et
la constitution de premières unités de détection (31), de secondes unités de détection (41) et de secondes lignes de connexion (42) sur le substrat transparent (1), dans lequel les premières unités de détection (31) sont connectées électriquement avec les premières lignes de connexion (32) via les trous traversants (22) dans la couche de film de filtre couleur (2) ; les secondes lignes de connexion (42) sont configurées de manière à ce qu'elles soient connectées électriquement aux secondes unités de détection (41) d'une même seconde électrode de détection ; et les premières unités de détection (31) sont isolées des secondes unités de détection (41) et des secondes lignes de connexion (42) ; dans lequel :
les premières lignes de connexion (32) constituent une partie d'une matrice noire ; et
les premières lignes de connexion (32) sont disposées au niveau de positions de connexion des éléments de filtre (21) de la couche de film de filtre couleur (2).
